# EUROPEAN PATENT SPECIFICATION

(11) **EP 1 349 178 B1**
(45) Date of publication and mention of the grant of the patent: **01.02.2006**
(21) Application number: 03006827.4
(22) Date of filing: 27.03.2003
(51) Int. Cl.: H01B 1/12, H01M 10/40, H01M 6/18, C08F 12/26, C08F 20/52

(54) **Ionic polymeric conductors, their monomers and use in lithium secondary batteries**
Polymere mit Ionenleitfähigkeit, ihre Monomere sowie ihre Verwendung in Lithiumbatterien
Polymères avoir conductivité ionique, les monomeres et l'utilisation en batteries de lithium

(30) Priority: 27.03.2002 JP 2002087355
(43) Date of publication of application: 01.10.2003
(73) Proprietor: Hitachi, Ltd., Tokyo (JP)
(72) Inventor: Nishimura, Shin, Hitachi, Ltd., Intell.Prop.Grp., Chiyoda-ku, Tokyo 100-8220 (JP); Satou, Akira, Hitachi, Ltd., Intell.Prop.Grp., Chiyoda-ku, Tokyo 100-8220 (JP); Okumura, Takefumi, Hitachi, Ltd., Intell.Prop.Grp., Chiyoda-ku, Tokyo 100-8220 (JP); Yamamoto, Hitoshi, Toyonaka-shi Osaka 560-0043 (JP); Ueyama, Norikazu, Toyonaka-shi Osaka 560-0043 (JP); Morishima, Makoto, Hitachi, Ltd., Intell.Prop.Grp., Chiyoda-ku, Tokyo 100-8220 (JP)
(74) Representative: Beetz & Partner

(56) References cited:
- EP-A- 1 098 382
- GB-A- 2 119 162
- US-A- 4 898 915
- MEYER: "Polymer Electrolytes for Lithium-Ion Batteries" ADVANCED MATERIALS, vol. 10, no. 6, 1998, pages 439-448, XP002246382
- "Ionic Conductivity of a Novel Solid Polymer Electrolyte" JOURNAL OF APPLIED POLYMER SCIENCE, vol. 80, 2001, pages 2176-2184, XP002246383

## Description

### FIELD OF THE INVENTION;

The present invention relates to ionic conductive organic electrolytes and polymer electrolytes, intermediates thereof, methods for their preparation and their use as solid electrolytes and separators in batteries, particularly lithium batteries.

With the progress of electronic technology, the performance of electronic devices has increased to make small size devices and make them portable; accordingly, secondary batteries having high energy density are needed as power sources for these devices.

In responding to this demand, lithium ion secondary batteries with an organic electrolyte solution (hereinafter referred to as lithium batteries) that have remarkably increased energy density have been developed and used widely.

In general, lithium batteries use as positive active material a lithium metal complex oxide such as lithium cobalt composite oxide, for example, and as a negative active material a carbon material that is capable of inserting lithium ions into intercalations of the carbon material (i.e. formation of lithium intercalation compounds) and of releasing lithium ions from the intercalation structure.

As lithium batteries use as an electrolyte an inflammable organic electrolyte, it is becoming difficult to secure safety of the batteries as the energy density increases, when they are subjected to such heavy duty as overcharge and overdischarge. Then, lithium batteries have been developed, that have lithium ion conductive solid polymers instead of the inflammable organic electrolyte solution.

Among the lithium ionic conductive solid polymers for the polymer electrolytes, polyethylene oxide is a typical one. The suitability of polyethylene oxide as a lithium ionic conductive solid electrolyte is pointed out by Almand et al. in "First Ion Transport in Solids", pp. 131, Elsevier, New York, 1979.

There have been made many improvements of the polymers and investigations on other polymers. At present, an ionic conductive polymer that exhibits the highest ionic conductivity is a branched copolymer of ethylene oxide and propylene oxide as disclosed in Japanese Patent Laid-open 2000-123632. The ionic conductivity is about 10-4 Scm⁻¹.

### BRIEF DESCRIPTION OF THE DRAWINGS

Fig. 1 is a graph that shows the relationship between the ionic conductivity of the polymer electrolyte and the temperature.
Fig. 2 shows a sectional view of a lithium battery that uses the polymer electrolyte obtained in the procedure described later.

### DESCRIPTION OF THE INVENTION

In the ionic conductive polymers that have been investigated heretofore, ion conductivity takes place jointly with molecular motion of the polymer. That is, functional groups having coordinating capability present in the polymer chain make coordination to lithium ions, whereby lithium ions can move to other coordination groups by transition along with the motion of molecular chains. Therefore, the ionic conductivity depends on the mobility of the molecular chains, and also depends on the motion necessary for conformation change of a main chain such as dihedral angle motion that needs large activation energy. When the temperature is so low that the molecular motion is suppressed, ionic conductivity is decreased at the same time.

It is the problem underlying the present invention to provide ionic conductive organic polymers suitable as solid electrolytes in batteries, their preparation, intermediates therefor and their use for or in batteries, particularly lithium batteries.

The above problem is solved according to the independent claims. The dependent claims relate to preferred embodiments of the concept of the present invention.

The inventors have devised to employ as a mechanism for transferring ions the rotation of a single bond in a molecular chain that has a small activation energy and that does not depend on the motion of a molecular chain. In such an organic compound functional groups that can become coordination groups or ligands to lithium ions are bonded to other organic groups, whereby the single bond can rotate freely over a wide range of temperature. The exchange of lithium ions between adjoining similar or analogous functional groups takes place by the action of the rotation. This phenomenon brings about ionic conductivity.

The structure of organic groups having functional groups capable of being ligands of lithium ions that are connected by means of a single bond was provided with amide groups as functional groups. The groups form hydrogen bonds having a stable steric structure with ligands, and the pKa of the functional groups to be ligands was changed to control the coordination capability of lithium ions.

As a result, the transition of lithium ions is accelerated from the functional groups of lower coordination capability to functional groups of higher coordination capability. When employing this mechanism, a higher ionic conductivity is obtained even at such low temperatures that the segmental motion of the polymer is suppressed.

The polymers of the present invention are of the general formula (1), 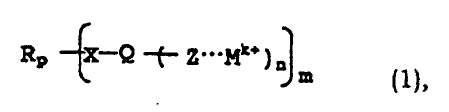
wherein
Rₚ is a residue of a homopolymer of a polymerizable compound,
X is an amide group -NH-CO- or -CO-NH-,
Q is a six-membered ring of a valence of n+ 1,
Z is hydroxy or methoxy,
M^{k+} is a cation of a valence k,
and
m, n and k are integers of 1 or more.

Rₚ is preferably a residue of polystyrene.

In preferred embodiments according to the present invention, Z is connected to a carbon atom in a six-membered ring, the carbon atom to which Z is connected being next to the single bond of the ring to the amide group.

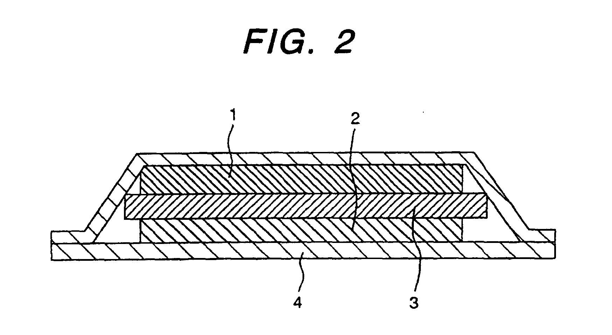

The lithium-ion conductive polymer electrolyte of the present invention shown in Fig. 2 comprises polymer and lithium salt. The polymer electrolyte can be prepared by polymerizing a monomer in the presence of the lithium salt both of them being dissolved in an organic solvent, followed by removing the solvent. The polymer electrolyte can also be prepared by adding the lithium salt to the polymer solution dissolved in an organic solvent, followed by removing the solvent.

The form of the polymer electrolyte is a sheet form when it is used as an electrolyte of a lithium battery. The sheet also works as a separator between the anode and cathode electrodes. The sheet polymer electrolyte is prepared by casting a solution of a monomer and a lithium salt on a polytetrafluoroethylene (PTFE) sheet. Then, the monomer is polymerized by heating addition polymerization, polyaddition, polycondensation, etc., followed by removing the solvent.

The sheet polymer electrolyte can also be prepared by casting a solution comprising a polymer and a lithium salt on the PTFE sheet, followed by removing the solvent.

Organic solvents for dissolving the polymers and lithium salts are NMP, dimethylformamide, toluene, etc., which can solve the lithium salts and do not react with the polymer.

The battery shown in Fig. 2 is assembled in such a manner that the polymer electrolyte sheet is sandwiched between an anode made of active material and a cathode made of active material.

In order to make an intimate contact between the anode and the sheet electrolyte of the invention and between the cathode and the sheet electrolyte of the invention, an anode and cathode that comprise the polymer electrolyte are preferable. In this case, a monomer containing lithium salt dissolved in an organic solvent is polymerized by heating on the anode and/or the cathode, or a solution in which the polymer and lithium salt are dissolved in an organic solvent is cast on the anode and/or cathode, followed by removing the solvent.

The intermediates of the polymers defined above are represented by the general formula 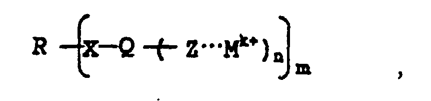
wherein R is a residue of a compound having a polymerizable bond, preferably an unsaturated bond, and X, Q, Z, M^{k+}, m, n and k are the same as defined above.

R is preferably a styrene residue.

In accordance with a preferred embodiment, the above formula represents a salt, wherein M^{k+} is a cation of valence 1 (M⁺). The group Q connected to the anionic residue Z is bonded to the group R by the group X. This bond can freely rotate in the molecule so that the salt exhibits cationic conductivity by the action of exchanging each other cations M^{k+} coordinated on the anionic residue Z.

In the above formula, the group R may have functional groups that can be polymerizable. Further, the polymerizable functional groups are preferably unsaturated bonds. The group R may be a polymer of an organic group having polymerizable unsaturated bonds. The group Q in the above formula may be an aryl group. Further, Z may be a hydroxy residue, and M⁺ may be a lithium ion.

The formula (1) encompasses the compounds (2) and (3) shown below: 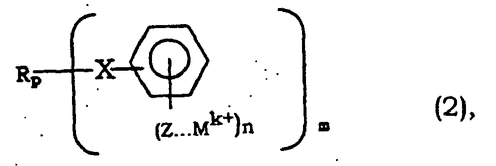 wherein Rₚ is an organic group of a valence m which is an integer of 1 or 2, X is an organic group and m is an integer of 1 or more, and 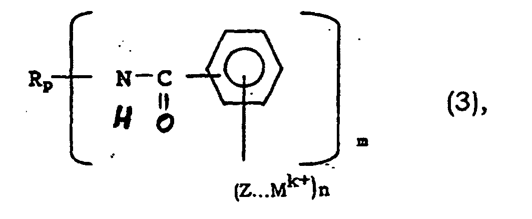 wherein Rₚ is an organic group of a valence m which is an integer of 1 or 2, and m is an integer of 1 or more.

Further preferred polymers are of formula (4), 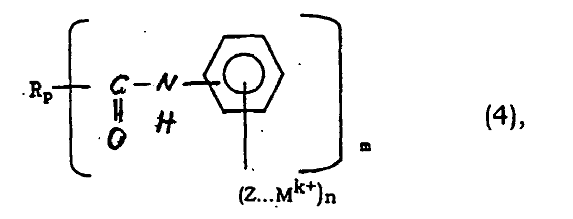 wherein Rₚ, Z, M^{k+}, m and n are as defined above.

The valence k of the metal cation M^{k+} in the polymers of formulae (2), (3) and (4) is preferably equal to 1.

Preferred intermediates according to the invention are those of formula (2'), 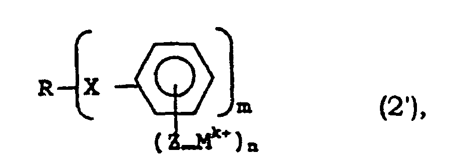 wherein R, X, Z, M^{k+}, m and n are as defined above, and of formulae 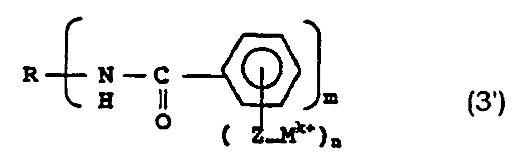 and 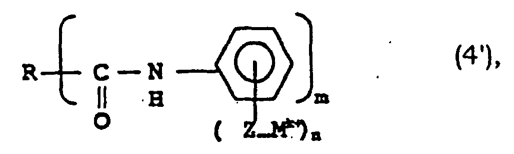 wherein R, Z, M^{k+}, m and n are as defined above.

In preferred intermediates, M^{k+} is a lithium ion.

A method of the present invention for preparing the polymers of formula (1) is characterized by polymerization of an intermediate as defined above, preferably in an organic solvent.

Another method is characterized by polymerization of a polymerizable monomer in the presence of a metal salt, preferably a lithium salt, in a solution in an organic solvent, and subsequently removing the solvent.

A further method for preparing the polymers according to the invention is characterized by adding a metal salt, preferably a lithium salt, to a solution of a polymer in an organic solvent, and subsequently removing the solvent.

A preferred method of the invention is characterized in that the respective solution is cast on a support sheet, preferably a PTFE sheet, eventually a polymerization is carried out, and then the solvent is removed.

The lithium battery of the present invention comprises a positive active material, a negative active material and a solid electrolyte, wherein the electrolyte is a polymer of formula (1) as defined above.

The organic group R and Rₚ is not limited in the present invention; examples therefore are groups of saturated hydrocarbons, unsaturated hydrocarbons, aromatic hydrocarbons, etc. The group may contain not only pure hydrocarbon groups or may be not only a pure hydrocarbon group, but may also comprise or consist of groups of hydrocarbons substituted with nitrogen, sulfur, oxygen atom, halogen atoms. The molecular weight of the groups is not limited; they may be low molecular weight compounds to high molecular weight compounds. The high molecular weight compounds may be polymers of low or high molecular weight monomers.

The number of substituents of the organic group Q is not limited; a number of one or more per one molecule is sufficient. When the group R is a polymer, the number may be that corresponding to the degree of polymerization. Further, several kinds of polymerizable monomers may be used to substitute the group Z. The methods of polymerization are not limited; for example, polymerization, polyaddition, polycondensation, etc. may be employed.

The group Z is a group having a function capable of coordinating cations thereon; when the group Z is hydroxy, the group Q-Z may be a hydroxyphenyl group / a phenolate anion, a dihydroxyphenyl group, etc.

When the functional group Z is a methoxy group (-OCH₃), Q-Z may be groups such as methoxyphenyl, dimethoxyphenyl, etc. If the number of carbon atoms is too large, they may interfere with the rotation of the single bond or may have an adverse affect on the solubility of the cationic conductor and impair the workability of the material.

The functional groups must be bonded by a single bond to the group R/Rₚ. According to the present invention the group R/Rₚ is bonded to the group Q through an amide group.

Cations used in the present invention include ions of alkali metals such as lithium, sodium, potassium and ions of alkaline earth metals such as magnesium, etc. Among the above ions lithium ions are most preferable.

The ion conductive polymer of the present invention can be used as a separator, as well as an electrolyte. The polymer functions as electrolyte and separator. The polymer is formed as a sheet of a thickness of several micrometers. The polymer can also be used as an anode to which positive active materials are added, e.g. for lithium ion batteries.

In lithium batteries, positive active materials are LiCoO₂, LiNiO₂, Li₁₊ₓMn₂₋ₓO₄, (x=0~0.33), Li₁₊ₓMn_{2-x-y}M_{y}O₄ (M is a metal which is selected from Ni, Co, Cr, Cu, Fe, Al, Mg, x=0-0.33, y=0~1.0, 2-x-y>0), TiS₂, MoS₂, V₆O₁₂, VSe, NiPS₂, polyaniline, polypyrrole, polythiophene, etc.

Negative active materials are graphite or carbon in which lithium ions are intercalated in the lamellar structure, lithium metal, lithium-lead alloy, etc.

### DESCRIPTION OF THE PREFERRED EMBODIMENTS

The present invention will be described in detail by way of examples.

### Example 1

232 g of salicylic acid and 283 g of 1-hydroxybenzotriazole were completely dissolved in a mixed solvent consisting of 3 l of tetrahydrofuran and 2.5 l of N,N'-dimethylformamide, the solvent having been dried by evaporation. The solution was stirred at room temperature for 30 min.

The solution was then cooled to 0 °C, and 287 g of 1-[3-(dimethylamino)-propyl]-3-ethyl carbodiimide were dropped in the solution, followed by stirring at 0 °C for 30 min. To the solution were slowly dropped 2 l of tetrahydrofuran containing 245 g of vinylaniline and cooled to 0 °C, followed by stirring the solution at room temperature for 2 days.

The reaction solution was condensed to extract an ethyl acetate phase from ethyl acetate and 2 n hydrochloric acid. The extract was rinsed with hydrochloric acid and saturated sodium chloride solution and dried with sodium sulfate, followed by condensation and purification to obtain a white powdery solid.

### Intermediate I: N-(4-vinylphenyl)-2-hydroxybenzoic amide

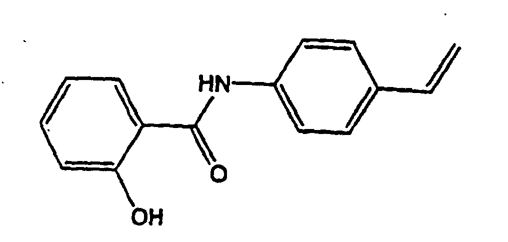

50 g of the resulting solid were completely dissolved in 11 of tetrahydrofuran, and 46 ml of a 10M n-hexane solution of butyllithium were dropped in the solution, followed by stirring. The solution was condensed, and the resulting substance was cast on a sheet of polytetrafluoroethylene. The film was dried under reduced pressure at room temperature to produce a cast film having a thickness of 100 µm.

The cast film was sandwiched between electrodes made of stainless steel (SUS 304) each having a diameter of 15 mm to obtain a cell for evaluation.

An a.c. current of an amplitude voltage of 10 mV was applied to the cell at room temperature to measure the a.c. impedance. The frequency range was from 1 Hz to 1 MHz. The ionic conductivity was derived from the reciprocal value of the bulk ohmic resistance that was obtained from the measurement of the a.c. impedance. The ionic conductivity was 5·10⁻⁴ Scm⁻¹, which was larger than that of the solid electrolyte made of polyethylene oxide.

### Example 2

259 g of dihydroxybenzoic acid and 283 g of 1-hydroxybenzotriazole were completely dissolved in a mixed solvent consisting of 31 of tetrahydrofuran and 2.51 of N,N'-dimethylformamide, the solvent having been dried by evaporation. The solution was stirred at room temperature for 30 min.

The solution was then cooled to 0 °C, and 287 g of 1-[3-(dimethylamino)-propyl]-3-ethyl carbodiimide were dropped in the solution, followed by stirring at 0 °C for 30 min. To the solution were slowly dropped 2 l of tetrahydrofuran containing 245 g of vinylaniline and cooled to 0 °C, followed by stirring the solution at room temperature for 2 days.

The reaction solution was condensed to extract an ethyl acetate phase from ethyl acetate and 2 n hydrochloric acid. The extract was rinsed with hydrochloric acid and saturated sodium chloride solution and dried with sodium sulfate, followed by condensation and purification to obtain a white powdery solid.

### Intermediate II: N-(4-vinylphenyl)-2, 6-dihydroxy-benzoic amide

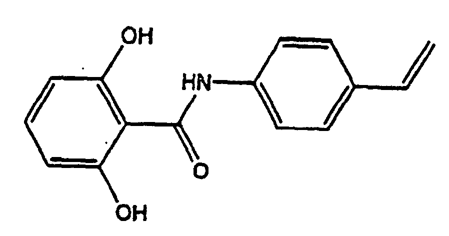

50 g of the resulting solid were completely dissolved in 1l of tetrahydrofuran, and 46 ml of a 10M n-hexane solution of butyl lithium were dropped in the solution, followed by stirring. The solution was condensed, and the resulting substance was cast on a sheet of polytetrafluoroethylene. The film was dried under reduced pressure at room temperature to produce a cast film having a thickness of 100 µm.

The cast film was sandwiched between electrodes made of stainless steel (SUS 304) each having a diameter of 15 mm to obtain a cell for evaluation.

An a.c. current of an amplitude voltage of 10 mV was applied to the cell at room temperature to measure the a.c. impedance. The frequency range was from 1 Hz to 1 MHz. The ionic conductivity was derived from the reciprocal value of the bulk ohmic resistance that was obtained from the measurement of the a.c. impedance. The ionic conductivity was 4·10⁻⁴ Scm⁻¹, which was larger than that of the solid electrolyte made of polyethylene oxide.

### Example 3

356 g of 2, 6-dimethoxybenzoic acid were completely dissolved in 1l of vaporization-dried N-methylpyrrolidone. To the solution were added 280 ml of triethylamine, 805 g of (2, 3-dihydro-2-thioxo-3-benzotyl)-phosphonate and 260 ml of aminostyrene. The solution was stirred at room temperature for one day. The reaction solution was dropped in 8l of an aqueous 1 % solution of sodium hydrogencarbonate, and then the solution was stirred. The precipitated solid was purified with ethylacetate/n-hexane to obtain a solid.

### Intermediate III: N-(4-vinylphenyl)-2, 6-dimethoxy benzoic amide

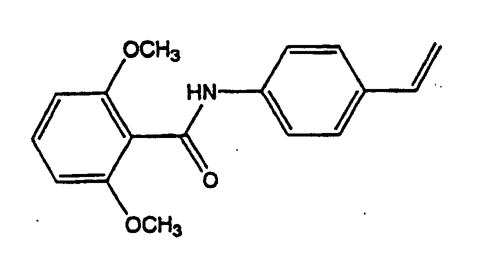

140 g of the resulting solid were completely dissolved in 5 l of tetrahydrofuran, and then 0.4 g of azobisisobutyronitrile was added. The solution was stirred at 65°C. The reaction solution was dropped in 10l of n-hexane to obtain the polymer. 50 g of the polymer were completely dissolved in 2 l of N-methylpyrrolidone, and then 98 g of lithium trisulfoneimide were added to the polymer solution, and the solution was stirred. The polymer solution was cast on a polytetrafluoroethylene sheet, and the cast film was dried at 60 °C in vacuo to obtain a cast film of a thickness of 100 µm.

The cast film was sandwiched between a pair of stainless steel electrodes (SUS 304) of 15 mm in diameter to prepare a cell for evaluation. An a.c. current of an amplitude of 10 mV was applied to the cell at room temperature of measure the a.c. impedance. The frequency range was from 1 Hz to 1 MHz. The ionic conductivity was determined from the reciprocal value of the bulk resistance obtained from the a.c. impedance. The ionic conductivity was 1.4·10⁻⁴ Scm⁻¹, which was almost the same as that of the solid electrolyte made of polyethylene oxide.

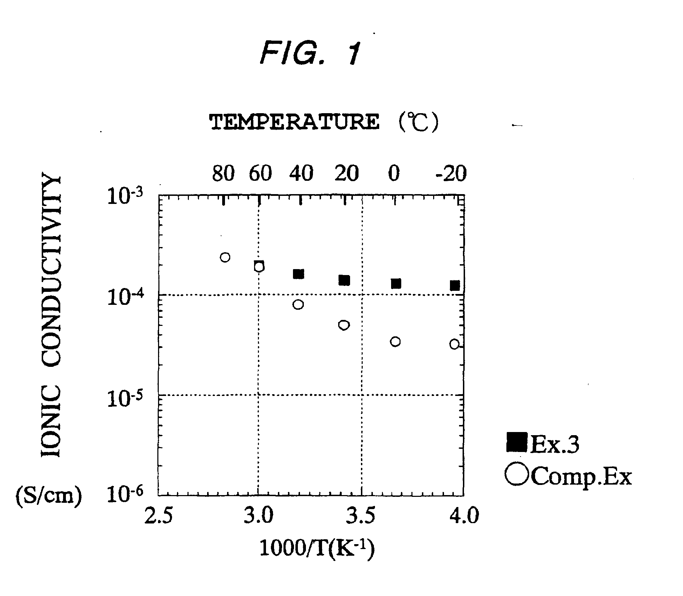

In Fig. 2 there is shown a sectional view of a lithium battery that uses the polymer electrolyte 3 obtained in the above procedure sandwiched between two electrodes 1, 2 in a housing 4. The graph of Fig. 1 shows the relationship between the ionic conductivity of the polymer electrolyte and the temperature.

The electrolyte obtained in this example exhibits a very small temperature coefficient, as compared to one obtained in the Comparative Example. That is, the coefficient of the electrolyte of Example 3 at -20 °C is almost the same as that at room temperature.

However, the electrolyte obtained in Comparative Example 2 shows a temperature coefficient change resulting in that the ionic conductivity decreases with increasing temperature. Therefore, the electrolyte of the present invention exhibits a much better ionic conductivity than the comparative polymer electrolyte.

### Example 4

356 g of 2,6-dimethoxybenzoic acid were completely dissolved in 1l of vaporization-dried N-methyl pyrrolidone. To the solution were added 280 ml of triethylamine, 805 g of 2,3-dihydro-2-thioxo-3-benzoylphosphonate and 260 ml of aminostyrene. The solution was stirred at room temperature for one day. The reaction solution was dropped in 8 l of an aqueous 1 % solution of sodium hydrogencarbonate, and then the solution was stirred. The precipitated solid was purified with ethylacetate/n-hexane to obtain a solid.

### Intermediate IV: N-(4-vinylphenyl)-3,5-dimethoxy-isonicotinamide

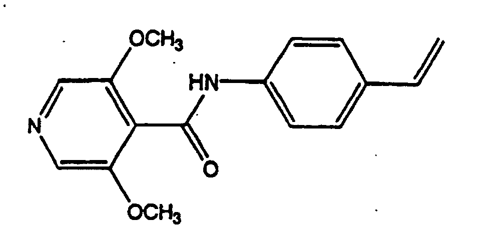

140 g of the resulting solid were completely dissolved in 5 l of tetrahydrofuran, and then 0.4 g of azobisisobutylonitrile was added. The solution was stirred at 65 °C. The reaction solution was dropped in 101 of n-hexane to obtain the polymer. 50 g of the polymer were completely dissolved in 2l of N-methylpyrrolidone, and then 98 g of lithium trisulfoneimide were added to the polymer solution, and the solution was stirred. The polymer solution was cast on a polytetrafluoroethylene sheet, and the cast film was dried at 60 °C in vacuo to obtain a cast film of a thickness of 100 µm.

The cast film was sandwiched between a pair of stainless steel electrodes (SUS304) of a diameter of 15 mm to prepare a cell for evaluation. An a.c. current of an amplitude of 10 mV was applied to the cell at room temperature to measure the a.c. impedance. The frequency range was from 1 Hz to 1 MHz. The ionic conductivity was determined from the reciprocal value of the bulk resistance obtained from the measurement of the a.c. impedance. The ionic conductivity was almost the same as that of the solid electrolyte made of polyethylene oxide.

### Example 5

183 g of 2,6-dimethoxybenzoic acid were completely dissolved in 500 ml of N-methylpyrrolidone that was evaporation-dried. Then, 140 ml of triethylamine and 403 g of 2,3-dihydro-2-thioxo-3-benzoylphosphonate were added to the solution.

The solution was added to 434 g of tris(2-aminoethyl)-amine that was dissolved in 500 ml of N-methylpyrrolidone, while cooling the solution. The solution was stirred at room temperature for two days. The reaction solution was dropped in 10 l of an aqueous 2 % solution of sodium hydrogencarbonate, and the solution was stirred. The precipitate was extracted with ethylacetate/n-hexane to obtain a solid.

### Intermediate V:

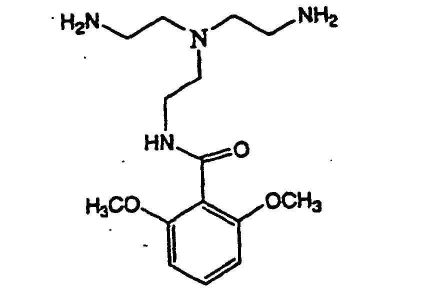

N-(di(2-aminoethyl)-aminoethyl)-2,6-dimethoxybenzoic amide 1.5 l of carbon tetrachloride containing 183 g of adipic acid dichloride were added to 1.5 l of an aqueous solution in which 160 g of the solid and 40 g of sodium hydroxide were dissolved, while stirring, thereby to precipitate the polymer. 50 g of the resulting polymer were dissolved in 2 l of phenol, and then 58 g of lithium trifluorosulfoneimide were added to the solution under stirring.

Then, the solution was cast on a polytetrafluoroethylene sheet, and the cast film was dried under vacuum at 60 °C to obtain a cast film of a thickness of 100 µm. The cast film was sandwiched between a pair of stainless steel electrodes (SUS304) of a diameter of 15 mm to prepare a cell for evaluation.

An a.c. current of an amplitude of 10 mV was applied to the cell at room temperature to measure the a.c. impedance. The frequency range was from 1 Hz to 1 MHz. The ionic conductivity was determined from the reciprocal value of the bulk resistance obtained from the measurement of the a.c. impedance. The ionic conductivity was almost the same as that of the solid electrolyte made of polyethylene oxide.

### Example 6

148 g of 4-vinylbenzoic acid and 160 g of 1-hydroxybenzotriazole were completely dissolved in a mixed solvent consisting of 2 l of tetrahydrofuran and 1.5 l of N,N'-dimethylformamide, and the solution was stirred at room temperature for 30 min. The solution was cooled to 0 °C, and then 171 g of 1-[3-(dimethylamino)-propyl]-3-ethylcarbodiimide were dropwise added, and it was further stirred at 0 °C for 30 min.

To the solution were gradually dropped 21 of tetrahydrofuran being cooled to 0 °C and containing 138 g of 2,6-dihydroxyaniline. The solution was stirred at room temperature for two days. The reaction solution was condensed, and the ethyl acetate phase was extracted from 2 n hydrochloric acid.

The extract was rinsed with hydrochloric acid and saturated sodium chloride solution, and then was dried with sodium sulfate. The product was condensed and purified to produce a white solid.

### Intermediate VI: N-(2,6-dihydroxyphenyl)-4-vinylbenzoic amide

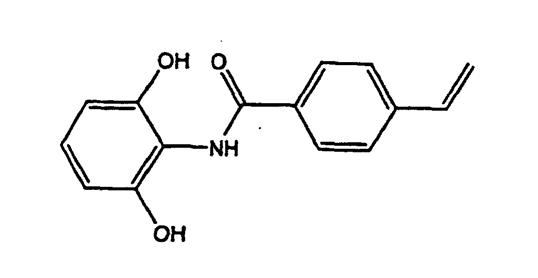

50 g of the resulting solid were completely dissolved in 1 l of tetrahydrofuran, and then 46 ml of a 10M hexane solution of butyl lithium were dropped in the solution under stirring. The solution was condensed and cast on a polytetrafluoroethylene sheet. The cast film was dried at room temperature to obtain a cast film of a thickness of 100 µm. The cast film was sandwiched between a pair of stainless steel electrodes (SUS304) of a diameter of 15 mm to prepare a cell for evaluation.

An a.c. current of an amplitude of 10 mV was applied to the cell at room temperature to measure the a.c. impedance. The frequency range was from 1 Hz to 1 MHz. The ionic conductivity was determined from the reciprocal value of the bulk resistance obtained from the measurement of the a.c. impedance.

The ionic conductivity was 1.6·10⁻⁵ Scm⁻¹, which was almost the same as that of the solid electrolyte made of polyethylene oxide.

### Comparative Example

37 g of a copolymer consisting of 20 mole % of ethylene oxide and 2-(2-methoxy)-ethylene glycidylether and 6.6 g of LiPF₆ as an electrolyte salt were mixed, and the mixture was dissolved in acetonitrile to prepare a solution. The solution was cast on a polytetrafluoroethylene sheet, and the cast solution film was dried under reduced pressure at 80 °C to obtain a cast film of a thickness of 100 µm.

The cast film was sandwiched between electrodes made of stainless steel (SUS304) each having a diameter of 15 mm to prepare a cell for evaluation. An a.c. current of an amplitude voltage of 10 mV was applied to the cell at room temperature to measure the a.c. impedance. The frequency range was from 1 Hz to 1 MHz. The ionic conductivity was derived from the reciprocal value of the bulk ohmic resistance that was obtained from the measurement of the a.c. impedance. The ionic conductivity was 5·10⁻⁵ Scm⁻¹.

As having been described in the Examples and the Comparative Example, the solid electrolyte according to the present invention that exhibits an ionic conductivity mechanism based on single bond rotation showed higher ionic conductivity than the conventional solid electrolyte whose conductivity is based on segmental motion of molecular chains.

The polymer of the present invention can be used as an electronic conductive material for connecting unit cells of a fuel cell system, capacitors, etc.

## Claims

1. Polymers of the general formula (1), 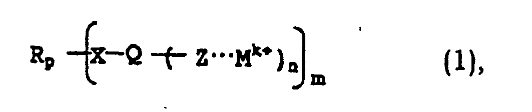
wherein
Rₚ is a residue of a homopolymer of a polymerizable compound,
X is an amide group -NH-CO- or -CO-NH-,
Q is a six-membered ring of a valence of n+ 1,
Z is hydroxy or methoxy,
M^{k+} is a cation of a valence k,
and
m, n and k are integers of 1 or more.

2. Polymers according to claim 1, wherein Rₚ is a residue of polystyrene.

3. Polymers according to claim 1 or 2, wherein Z is connected to a carbon atom in a six-membered ring, the carbon atom to which Z is connected being next to the single bond of the ring to the amide group.

4. Polymers according to any of claims 1 to 3, wherein Q is an aryl group.

5. Polymers according to any of claims 1 to 4, represented by the formula (2), 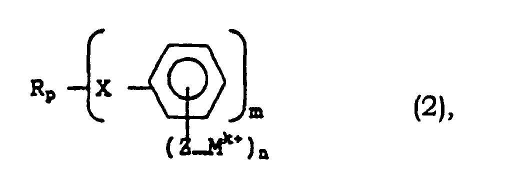 wherein Rₚ, X, Z, M^{k+}, m and n are as defined in claim 1.

6. Polymers according to any of claims 1 to 5, represented by the formula (3), 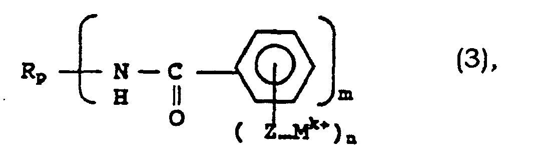 wherein Rₚ, Z, M^{k+}, m and n are as defined in claim 1.

7. Polymers according to any of claims 1 to 5, represented by the formula (4), 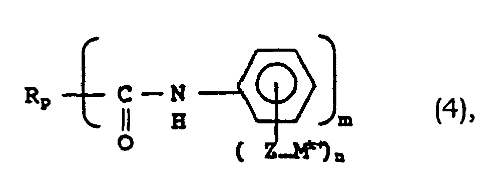 wherein Rₚ, Z, M^{k+}, m and n are as defined in claim 1.

8. Polymers according to any of claims 2 to 7, wherein Rₚ is a residue of polystyrene, and M^{k+} is a lithium ion.

9. Intermediates of the polymers defined in any of claims 1 to 8, represented by the general formula 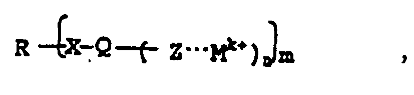 wherein R is a residue of a polymerizable compound, and Q, X, Z, M^{k+}, m, n and k are the same as defined in claim 1.

10. Intermediates according to claim 9, wherein R is a styrene residue.

11. Intermediates according to claim 9 or 10, wherein Z is connected to a carbon atom in a six-membered ring, the carbon atom being next to the single bond of the ring to the amide group.

12. Intermediates according to any of claims 9 to 11, wherein Q is an aryl group.

13. Intermediates according to any of claims 9 to 12, represented by the formula (2'), 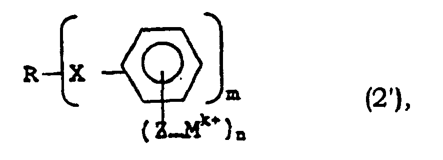 wherein R is as defined in claim 9, and X, Z, M^{k+}, m and n are as defined in claim 1.

14. Intermediates according to any of claims 9 to 13, represented by the formulae 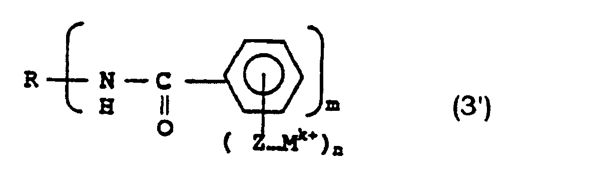 and 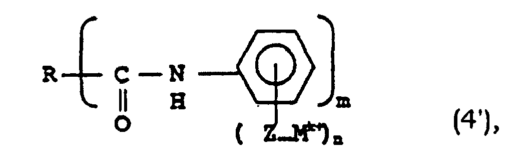 wherein R is as defined in claim 9, and Z, M^{k+}, m and n are as defined in claim 1.

15. Intermediates according to any of claims 9 to 14, wherein M^{k+} is a lithium ion.

16. Method for preparing the polymers according to claims 1 to 8, **characterized by** polymerization of an intermediate according to any of claims 9 to 15, preferably in an organic solvent.

17. Method for preparing the polymers according to claims 1 to 8, **characterized by** polymerization of a polymerizable monomer in the presence of a metal salt, preferably a lithium salt, in a solution in an organic solvent, and subsequently removing the solvent.

18. Method for preparing the polymers according to claims 1 to 8, **characterized by** adding a metal salt, preferably a lithium salt, to a solution of a polymer in an organic solvent, and subsequently removing the solvent.

19. Method according to any of claims 16 to 18, **characterized in that** the respective solution is cast on a support sheet, preferably a PTFE sheet, eventually a polymerization is carried out, and then the solvent is removed.

20. Method for preparing a polymer sheet electrolyte comprising a polymer according to any of claims 1 to 8, being in intimate contact with the anode and/or the cathode of or for a lithium battery, comprising
- polymerizing a monomer in a solution in an organic solvent comprising a lithium salt dissolved therein on the anode and/or the cathode
or
casting a solution in which the polymer and the lithium salt are dissolved in an organic solvent on the anode and/or the cathode,
and
- removing the organic solvent.

21. Lithium battery comprising a positive active material, a negative active material and a solid electrolyte, wherein the electrolyte is a polymer according to any of claims 1 to 8.

22. Lithium battery according to claim 21, wherein the electrolyte is a polymer according to any of claims 3 to 8.

23. Use of the polymers according to claims 1 to 8 for or as solid ionic conductive polymer electrolytes for or in batteries, preferably lithium batteries.

## Patentansprüche

1. Polymere der allgemeinen Formel (1), 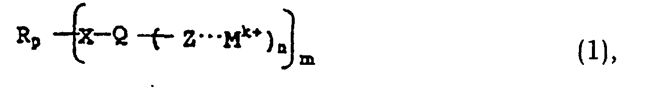
worin bedeuten:
Rₚ einen Rest eines Homopolymers einer polymerisierbaren Verbindung,
X eine Amidgruppe -NH-CO- oder -CO-NH-,
Q einen sechsgliedrigen Ring einer Wertigkeit von n+1,
Z Hydroxy oder Methoxy,
M^{k+} ein Kation der Wertigkeit k
und
m, n und k ganze Zahlen von 1 oder höher.

2. Polymere nach Anspruch 1, bei denen Rₚ ein Polystyrolrest ist.

3. Polymere nach Anspruch 1 oder 2, bei denen Z an ein Kohlenstoffatom in einem sechsgliedrigen Ring gebunden ist, wobei das Kohlenstoffatom, an dem Z gebunden ist, der Einfachbindung des Rings mit der Amidgruppe benachbart ist.

4. Polymere nach einem oder mehreren der Ansprüche 1 bis 3, bei denen Q eine Arylgruppe ist.

5. Polymere nach einem oder mehreren der Ansprüche 1 bis 4 der Formel (2), 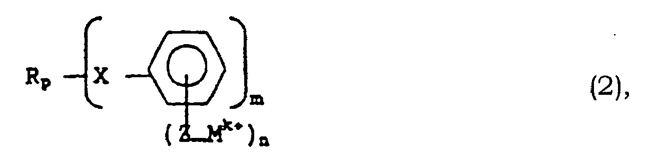 worin Rₚ, X, Z, M^{k+}, m und n wie in Anspruch 1 definiert sind.

6. Polymere nach einem der mehreren der Ansprüceh 1 bis 5 der Formel (3), 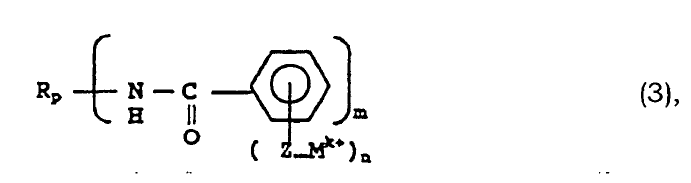 worin Rₚ, Z, M^{k+}, m und n wie in Anspruch 1 definiert sind.

7. Polymere nach einem oder mehreren der Ansprüche 1 bis 5 der Formel (4), 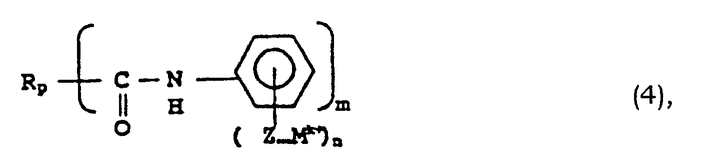 worin Rₚ, Z, M^{k+}, m und n wie in Anspruch 1 definiert sind.

8. Polymere nach einem oder mehreren der Ansprüche 2 bis 7, bei denen Rₚ ein Polystyrolrest ist und M^{k+} ein Lithiumion bedeutet.

9. Zwischenprodukte der in einem oder mehreren der Ansprüche 1 bis 8 definierten Polymeren der allgemeinen Formel 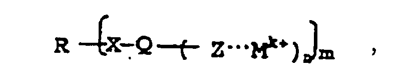 worin R ein Rest einer polymerisierbaren Verbindung ist und Q, X, Z, M^{k+}, m, n und k wie in Anspruch 1 definiert sind.

10. Zwischenprodukte nach Anspruch 9, bei denen R ein Styrolrest ist.

11. Zwischenprodukte nach Anspruch 9 oder 10, bei denen Z an ein Kohlenstoffatom in einem sechsgliedrigen Ring gebunden ist, wobei das Kohlenstoffatom, an dem Z gebunden ist, der Einfachbindung des Rings mit der Amidgruppe benachbart ist.

12. Zwischenprodukte nach einem oder mehreren der Ansprüche 9 bis 11, bei denen Q eine Arylgruppe ist.

13. Zwischenprodukte nach einem oder mehreren der Ansprüche 9 bis 12 der Formel (2'), 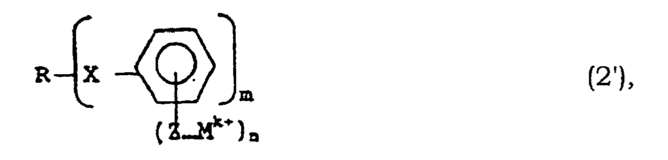 worin R wie in Anspruch 9 definiert ist und X, Z, M^{k+}, m und n wie in Anspruch 1 definiert sind.

14. Zwischenprodukte nach einem oder mehreren der Ansprüche 9 bis 13 der Formeln 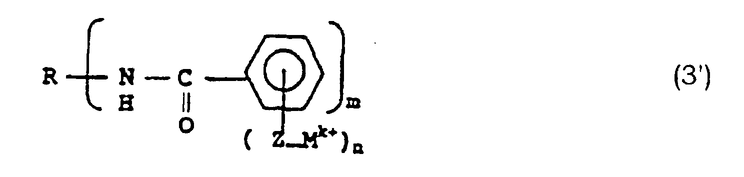 und 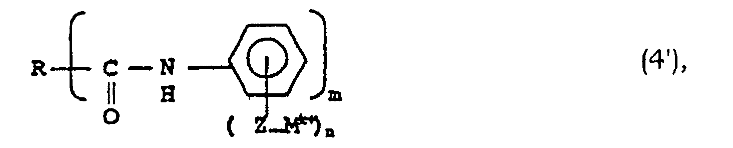 worin R wie in Anspruch 9 definiert ist und Z, M^{k+}, m und n wie in Anspruch 1 definiert sind.

15. Zwischenprodukte nach einem oder mehreren der Ansprüche 9 bis 14, bei denen M^{k+} ein Lithiumion ist.

16. Verfahren zur Herstellung der Polymeren nach den Ansprüchen 1 bis 8, **gekennzeichnet durch** Polymerisation eines Zwischenprodukts nach einem der Ansprüche 9 bis 15, bevorzugt in einem organischen Lösungsmittel.

17. Verfahren zur Herstellung der Polymeren nach den Ansprüchen 1 bis 8, **gekennzeichnet durch** Polymerisation eines polymerisierbaren Monomers in Gegenwart eines Metallsalzes, bevorzugt eines Lithiumsalzes, in einer Lösung in einem organischen Lösungsmittel und anschließende Entfernung des Lösungsmittels.

18. Verfahren zur Herstellung der Polymeren nach den Ansprüchen 1 bis 8, **gekennzeichnet durch** Zugabe eines Metallsalzes, bevorzugt eines Lithiumsalzes, zu einer Lösung eines Polymers in einem organischen Lösungsmittel und anschließende Entfernung des Lösungsmittels.

19. Verfahren nach einem oder mehreren der Ansprüche 16 bis 18, **dadurch gekennzeichnet, dass** die entsprechende Lösung auf einen flachen Träger, bevorzugt aus PTFE, gegossen wird, gegebenenfalls eine Polymerisation durchgeführt wird und anschließend das Lösungsmittel entfernt wird.

20. Verfahren zur Herstellung eines Polymer-Flachelektrolyten, der ein Polymer nach einem der Ansprüche 1 bis 8 aufweist, das mit der Anode und/oder der Kathode einer Lithiumbatterie oder für eine Lithiumbatterie in engem Kontakt steht, das folgende Schritte umfasst:
- Polymerisation eines Monomers in einer Lösung in einem organischen Lösungsmittel, die ein darin gelöstes Lithiumsalz enthält, auf der Anode und/oder der Kathode
oder
Gießen einer Lösung, in der das Polymer und das Lithiumsalz in einem organischen Lösungsmittel gelöst sind, auf die Anode und/oder die Kathode
und
- Entfernen des organischen Lösungsmittels.

21. Lithiumbatterie, die ein positives aktives Material, ein negatives aktives Material und einen festen Elektrolyten aufweist, bei welcher der Elektrolyt ein Polymer nach einem der Ansprüche 1 bis 8 ist.

22. Lithiumbatterie nach Anspruch 21, bei welcher der Elektrolyt ein Polymer nach einem der Ansprüche 3 bis 8 ist.

23. Verwendung der Polymeren nach den Ansprüchen 1 bis 8 für oder als feste polymere Elektrolyte mit Ionenleitfähigkeit für oder in Batterien, bevorzugt Lithiumbatterien.

## Revendications

1. Polymères de formule générale (1), 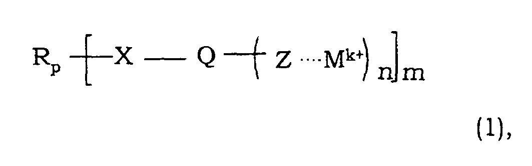
dans laquelle,
Rₚ est un résidu d'un homopolymère d'un composé polymérisable,
X est un groupe amide -NH-CO ou -CO-NH-,
Q est un cycle à six membres d'une valence de n+1,
Z est un groupe hydroxy ou méthoxy,
M^{k+} est un cation d'une valence k,
et
m, n et k sont des entiers de 1 ou plus.

2. Polymères selon la revendication 1, dans lesquels Rₚ est un résidu de polystyrène.

3. Polymères selon la revendication 1 ou 2, dans lesquels Z est relié à un atome de carbone dans un cycle à six membres, l'atome de carbone auquel Z est lié étant proche de la simple liaison du cycle au groupe amide.

4. Polymères selon l'une quelconque des revendications 1 à 3, dans lesquels Q est un groupe aryle.

5. Polymères selon l'une quelconque des revendications 1 à 4, représentés par la formule (2), 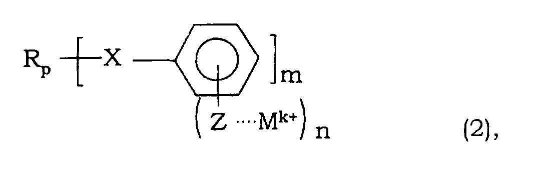 dans laquelle Rₚ, X, Z, M^{k+}, m et n sont tels que définis dans la revendication 1.

6. Polymères selon l'une quelconque des revendications 1 à 5, représentés par la formule (3), 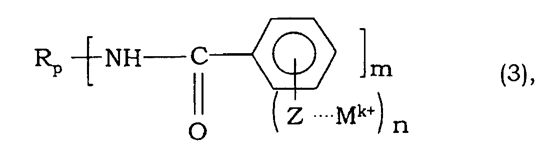 dans laquelle Rₚ, Z, M^{k+}, m et n sont tels que définis dans la revendication 1.

7. Polymères selon l'une quelconque des revendications 1 à 5, représentés par la formule (4), 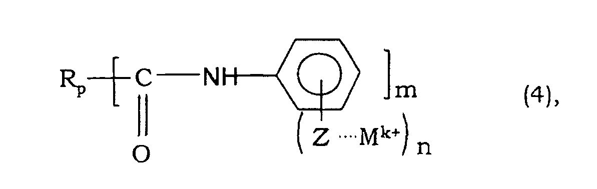 dans laquelle Rₚ, Z, M^{k+}, m et n sont tels que définis dans la revendication 1.

8. Polymères selon l'une quelconque des revendications 2 à 7, dans lesquels Rₚ est un résidu de polystyrène, et M^{k+} est un ion lithium.

9. Intermédiaires des polymères définis dans l'une quelconque des revendications 1 à 8, représentés par la formule générale 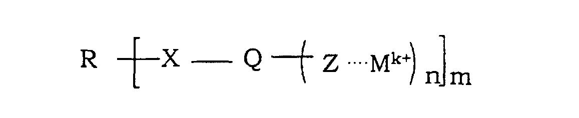 dans laquelle R est un résidu d'un composé polymérisable et Q, X, Z, M^{k+}, m, n et k sont identiques à ceux définis dans la revendication 1.

10. Intermédiaires selon la revendication 9, dans lesquels R est un résidu de styrène.

11. Intermédiaires selon la revendication 9 ou 10, dans lesquels Z est relié à un atome de carbone dans un cycle de six membres, l'atome de carbone étant proche de la simple liaison du cycle au groupe amide.

12. Intermédiaires selon l'une quelconque des revendications 9 à 11, dans lesquels Q est un groupe aryle.

13. Intermédiaires selon l'une quelconque des revendications 9 à 12, représentés par la formule (2'), 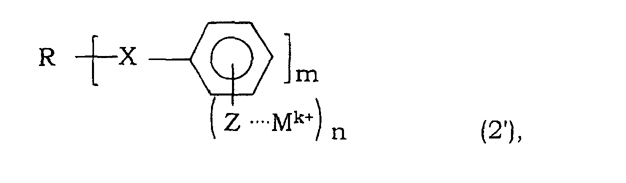 dans laquelle R est tel que défini dans la revendication 9, et X, Z, M^{k+}, m et n sont identiques à ceux définis dans la revendication 1.

14. Intermédiaires selon l'une quelconque des revendications 9 à 13, représentés par les formules 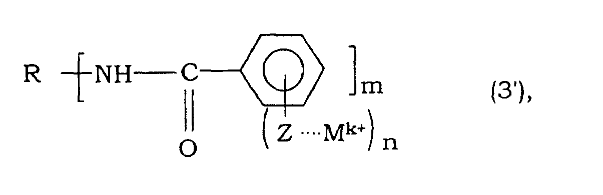 et 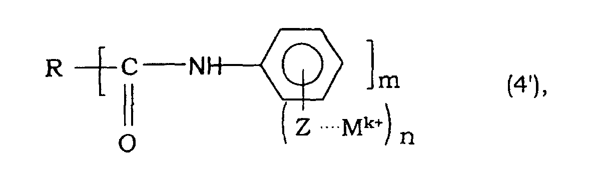 dans laquelle R est tel que défini dans la revendication 9, et Z, M^{k+}, m et n sont tels que définis dans la revendication 1.

15. Intermédiaires selon l'une quelconque des revendications 9 à 14, dans lesquels M^{k+} est un ion lithium.

16. Procédé pour la préparation des polymères selon les revendications 1 à 8, **caractérisé par** la polymérisation d'un intermédiaire selon l'une quelconque des revendications 9 à 15, de préférence dans un solvant organique.

17. Procédé pour la préparation des polymères selon les revendications 1 à 8, **caractérisé par** la polymérisation d'un monomère polymérisable en présence d'un sel métallique, de préférence un sel de lithium, dans une solution dans un solvant organique et ultérieurement, l'élimination du solvant.

18. Procédé pour la préparation des polymères selon les revendications 1 à 8, **caractérisé par** l'addition d'un sel métallique, de préférence un sel de lithium, à une solution d'un polymère dans un solvant organique, et ultérieurement, l'élimination du solvant.

19. Procédé selon l'une quelconque des revendications 16 à 18, **caractérisé en ce que** la solution en question est coulée sur une feuille support, de préférence une feuille en PTFE, et **en ce que**, éventuellement, une polymérisation est réalisée et ensuite, le solvant est éliminé.

20. Procédé pour la préparation d'un électrolyte polymère en feuille comprenant un polymère selon l'une quelconque des revendications 1 à 8, étant en contact intime avec l'anode et/ou la cathode de ou pour une batterie au lithium, comprenant
- la polymérisation d'un monomère dans une solution dans un solvant organique comprenant un sel de lithium qui y est dissous sur l'anode et/ou la cathode
ou
la coulée d'une solution dans laquelle le polymère et le sel de lithium sont dissous dans un solvant organique sur l'anode et/ou la cathode,
et
- l'élimination du solvant organique.

21. Batterie au lithium comprenant un matériau actif positif, un matériau actif négatif et un électrolyte solide, dans laquelle l'électrolyte est un polymère selon l'une quelconque des revendications 1 à 8.

22. Batterie au lithium selon la revendication 21, dans laquelle l'électrolyte est un polymère selon l'une quelconque des revendications 3 à 8.

23. Utilisation des polymères selon les revendications 1 à 8 pour ou en tant qu'électrolytes polymères à conductivité ionique solides pour ou dans des batteries, de préférence des batteries au lithium.
